Europäisches Patentamt

European Patent Office

Office européen des brevets

(19)

(11) Veröffentlichungsnummer: **0 229 999 B1**

## (12) EUROPÄISCHE PATENTSCHRIFT

(45) Veröffentlichungstag der Patentschrift: **24.07.91**

(21) Anmeldenummer: **86117483.7**

(22) Anmeldetag: **16.12.86**

(51) Int. Cl.⁵: **C08G 71/04**, C08L 75/04,
C08J 3/02, C09D 175/04

(54) **Isocyanatfreie Polyurethan-Dispersionen.**

(30) Priorität: **20.12.85 DE 3545195**

(43) Veröffentlichungstag der Anmeldung:
**29.07.87 Patentblatt 87/31**

(45) Bekanntmachung des Hinweises auf die
Patenterteilung:
**24.07.91 Patentblatt 91/30**

(84) Benannte Vertragsstaaten:
**AT BE CH DE ES FR GB IT LI NL SE**

(56) Entgegenhaltungen:
**DE-B- 2 624 442        FR-A- 1 023 013
FR-A- 1 058 065        GB-A- 1 180 606
US-A- 3 424 724        US-A- 4 488 878**

**CHEMICAL ABSTRACTS, Band 102, Nr. 14, 8.
April 1985, Seite 68, Zusammenfassungsnr.
114867t, Columbus, Ohio, US; Z. WIRPSZA et
al.: "Urethane elastomers without isocyanates", & KAUCH. REZINA 1984, (12), 11-13**

(73) Patentinhaber: **HOECHST AKTIENGESELL-
SCHAFT
Postfach 80 03 20
W-6230 Frankfurt am Main 80(DE)**

(72) Erfinder: **Eckes, Helmut, Dr.
Feldbergblick 5
W-6239 Eppstein/Taunus(DE)**
Erfinder: **Engel, Dieter, Dr.
Rüsselsheimer Strasse 33
W-6092 Kelsterbach(DE)**

## Beschreibung

Die Erfindung betrifft isocyanatfreie Polyurethan-Dispersionen und ein neues Verfahren zur Herstellung von Polyurethanen über eine Zwischenstufe oligomerer Polyurethan-Voraddukte, die hydrophile Gruppen enthalten, die die Dispergierbarkeit der Oligomeren in Wasser gewährleisten.

Bisher bekannte Dispersionen werden nach verschiedenen Verfahren hergestellt, die z.B. in D. Dieterich und H. Reiff, Angewandte makromolekulare Chemie, 26, 85 (1972), beschrieben sind. Nach den Angaben wird entweder die Lösung eines Polyurethans in einem organischen Lösungsmittel in eine wäßrige Dispersion übergeführt oder es wird ein flüssiges Präpolymeres mit oder ohne Lösungsmittel in Wasser dispergiert. Ein flüssiges, NCO-Gruppen aufweisendes Präpolymeres kann beispielsweise unter kräftigem Rühren in Wasser eingetragen werden, wobei zunächst eine Emulsion des Präpolymeren entsteht, die durch Kettenverlängerung mit Wasser oder einem Di- oder Polyamin zum hochmolekularen Polyurethanharnstoff weiter reagiert.

Zur Durchführung dieser Synthesen ist stets ein isocyanatgruppenhaltiger Baustein, meist ein Diisocyanat, erforderlich.

Isocyanate sind aufwenig herstellbare, toxische und schwierig zu handhabende Verbindungen. Daher war es wünschenswert, wäßrige Polyurethandispersionen ohne Verwendung von Isocyanat-Bausteinen herzustellen.

Gegenstand der Erfindung sind Polyurethan-Dispersionen auf Basis von Reaktionsprodukten von (A) bismethylolierten Urethanen mit mindestens zwei Urethangruppen und (B) Polyhydroxylverbindungen, die zur Ionenbildung befähigte Gruppen enthalten, wobei diese Gruppen in neutralisierter Form vorliegen. Gegenstand der Erfindung ist auch ein Verfahren zur Herstellung der Polyurethandispersionen sowie ihre Verwendung.

Vorteile des erfindungsgemäßen Verfahrens sind die Herstellung von Polyurethan-Dispersionen unter Vermeidung des Einsatzes von Isocyanaten und somit die Verwendung preisgünstiger, nicht toxischer, leicht handhabbarer Komponenten, ferner ergibt sich die Möglichkeit, zusätzlich freie OH-Gruppen einzubauen, um eine gute Vernetzbarkeit z.B. mit Epoxyd- oder Melaminharzen zu erreichen. Bei der Herstellung der erfindungsgemäßen Dispersionen können zur Neutralisation auch Ammoniak oder Aminoalkohole eingesetzt werden, deren Anwendung sich ebenso wie die Anwesenheit von freien OH-Gruppen bei den bekannten, über Kettenverlängerung hergestellten isocyanathaltigen Polyurethan-Dispersionen verbietet.

Geeignete methylolierte Urethane A) sind bekannt. Sie werden mehrstufig durch Reaktion von Alkylurethanen mit 1 bis 12, vorzugsweise 2 bis 5 C-Atomen in der Alkylgruppe, hergestellt durch Umsetzung von entsprechenden Monoalkoholen und Harnstoff, z.B. Butylurethan mit Polyhydroxy-funktionellen Komponenten in erster Stufe und anschließender Umsetzung der gebildeten Urethangruppen mit Formaldehyd in zweiter Stufe zu entsprechenden Methylolverbindungen hergestellt. Die Umsetzung in erster Stufe wird bei Temperaturen von 100 bis 160 °C in Gegenwart von Umesterungskatalysatoren, beispielsweise Titanalkoholaten durchgeführt. Dabei werden die in den Alkylurethanen enthaltenen Alkylgruppen abgespalten und in Form der Monoalkohole im allgemeinen unter vermindertem Druck abdestilliert. Bei der Umsetzung in erster Stufe können auch bereits Urethangruppen enthaltende Zwischenprodukte z.B. urethanisierte Polyester anwesend sein, die nicht an der Umsetzung zwischen den Alkylurethanen und den Polyhydroxy-funktionellen Komponenten teilnehmen. Ebenso kann die Umsetzung von Harnstoff mit den Polyhydroxy-funktionellen Komponenten direkt zu den Bisurethanen durchgeführt werden.

Bei der Umsetzung der Bisurethane zu den methylolierten Produkten werden die Ausgangsverbindungen mit Paraformaldehyd oder einer wäßrigen Lösung von Formaldehyd in einer Aufschlämmung gemischt und die Reaktion durch Erwärmen auf 50 bis 150 °C in Gegenwart von Basen als Katalysatoren (z.B. Carbonat, Methylat oder Hydroxyd) gestartet. Der Fortgang der Reaktion ist durch eine Homogenisierung der Reaktionsmischung deutlich erkennbar. Die Umsetzung mit Paraformaldehyd in der Schmelze ist ebenso möglich.

Als Polyhydroxy-funktionelle Komponenten können Diole eingesetzt werden, wie Äthylenglykol, die verschiedenen Propylen- und Butylenglykole, Neopentylglykol, Hexandiol und dergleichen, ferner Polyglykoläther, wie Diäthylenglykol, Triäthylenglykol, OH-Gruppen-terminierte Polyester mit Molekulargewichten von 200 bis 10000, die wiederum aus den in der Polyesterchemie gängigen Verbindungen aufgebaut sind, z.B. Adipinsäure, Terephthalsäure, Isophthalsäure, Maleinsäure sowie deren Anhydrid, vorstehend genannte zwei- sowie höherwertige Alkohole wie Trimethylolpropan, Glycerin, Pentaerythrit, Zuckerderivate oder deren Gemische oder Alkoholäther, Polytetrahydrofurane, Polycaprolactame und Polycaprolactone, Polybutadienole sowie OH-funktionelle Acrylate.

Die so erhaltenen Bismethylolurethane werden erfindungsgemäß, gegebenenfalls auch im Eintopf-Verfahren, mit Polyhydroxylverbindungen B), die zur Ionenbildung befähigt sind bei 100 bis 160, vorzugsweise 120 bis 150 °C in der Schmelze umgesetzt. Zur Ionenbildung befähigte Verbindungen sind beispielsweise Dihydroxycarbonsäuren wie 2,2-Bis-hydroxymethylessigsäure, -propionsäure, Weinsäure, Dihydroxybenzoesäure und dergleichen. Zur Herstellung von kationischen Dispersionen werden Alkanolamine mit bis zu 20, vorzugsweise bis zu 10 C-Atomen wie Diäthanolamin, Triäthanolamin, N-Methyldiisopropanolamin eingebaut.

Dabei entstehen stets unter Wasserabspaltung Äthergruppen, der Fortgang der Reaktion ist durch die abgespaltene Wassermenge kontrollierbar. In dieser Stufe können weitere, zur Polyverätherung befähigte Komponenten eingebaut werden z.B. Diole und OH-gruppenhaltige Polyester.

Nach dieser Polyverätherungsreaktion werden die zur Ionenbildung befähigten Gruppen, z.B. Carboxylgruppen, Sulfonsäure- und Phosphorsäuregruppen, zur Quaternisierung befähigte Aminogruppen, Schwefel- und Phosphorgruppen durch Neutralisation in Gegenwart von Lösungsmittel in ionische Gruppen überführt.

Der derart hergestellte Festkörper der Dispersion wird mit wasser- und polymerverträglichen Lösungsmitteln versetzt und durch Zugabe geeigneter Salzbildungsreagenzien neutralisiert. Im Fall, daß zur Anionenbildung befähigte Gruppen in das Polyäthermolekül eingebaut sind, werden Alkali, Ammoniak, Amine oder Aminoalkohole zugegeben, während bei N-Atomen (oder S-, P-Atomen) im Polyäthermolekül Säuren und Quaternisierungsreagenzien wie Salzsäure, Essigsäure, Phosphorsäure, sowie Dimethylsulfat und Methylbromid verwendet werden. Gegebenenfalls kann das Lösungsmittel auch erst nach der Neutralisation dem Ansatz zugegeben werden. Geeignete Lösungsmittel sind wassermischbare Äther, Alkohole, Ätheralkohole, Ketone, Ester sowie N-Methylpyrrolidon und Dimethylformamid.

Das gebildete Gemisch wird anschließend durch Zugabe von Wasser in Gegenwart von Lösungsmitteln unter leichter Erwärmung und Rühren in eine kolloidale Dispersion überführt.

Die hergestellten Dispersionen können nach bekannten Auftragsmethoden wie Rakeln, Spritzen, Tauchen oder elektrophoretisch aufgetragen werden und trocknen nach dem Auftragen in dünner Schicht zu zäh-elastischen Filmen mit guter Haftung auf vielen Substraten, wie Glas, Kunststoff, Metall, Leder, Papier und dergleichen, wobei eine hohe Trocknungsgeschwindigkeit, auch bei niedrigen Temperaturen, erreicht wird.

In den nachfolgenden Beispielen sind T stets Gewichtsteile und Prozent-Angaben stets Gewichtsprozent.

### Beispiele

### Bisurethan-Herstellung

1) 514 T Butylurethan und 236 T Hexandiol-1,6 wurden vermischt, aufgeschmolzen und bei 100°C unter vermindertem Druck entwässert. Nach 30 Minuten wurden 1 % Butyltitanat zugegeben und die Temperatur auf 140°C erhöht. Das bei der Umesterung entstehende Butanol wurde durch Anlegen von vermindertem Druck (100 bis 150 Torr) aus dem Ansatz entfernt, wobei die Vorlage mit Eis gekühlt wurde. Der Umsetzungsgrad wurde durch Kontrolle der Destillat-Menge bestimmt. Das entstandene Bisurethan fiel als Niederschlag aus. Der Niederschlag wurde mit Toluol/Äthanol 1:1 aufgeschlämmt, abgenutscht und mehrmals mit Methanol gewaschen, um Butylurethan und Hexandiolreste aus dem Ansatz zu entfernen und das gereinigte Produkt bei Raumtemperatur unter vermindertem Druck getrocknet.
Ausbeute 292 T Hexyliden-bis-urethan -1,6, Schmp.: 203-207°C Menge des Destillats 380 T.

2) 600 T eines linearen, OH-gruppenhaltigen Polyesters aus 1 Mol Adipinsäure, 3 Mol Isophthalsäure und 4,8 Mol Hexandiol-1,6 (Säurezahl 7, OH-Zahl 72) und 81 T Perhydrobisphenol A wurden mit 274 T Butylurethan vermischt und analog Beispiel 1 umgesetzt. Die Reaktion wurde solange weitergeführt, bis kein Butanol mehr abdestillierte (ca. 15 Stunden). Eine Reinigung wie in Beispiel 1 unterblieb, da das entstandene Urethan in homogener Schmelze anfiel. Ausbeute 890 T eines Produktes von wachsartiger Beschaffenheit, Destillatmenge 156 T.

### Verätherung

3) 204 T Hexyliden-bis-urethan -1,6, erhalten gemäß Beispiel 1, und 60 T Paraformaldehyd (91 %ig) wurden mit 1,3 T Natriumcarbonat vermischt und auf 110°C erwärmt. Durch die dabei eintretende Reaktion begann das Gemisch zu schmelzen und war nach etwa einer Stunde vollständig umgesetzt. Die homogene Schmelze wurde mit 19 T 2,2-Bis-hydroxymethylpropionsäure versetzt, auf 130°C erwärmt und solange auf Temperatur gehalten, bis kein Reaktionswasser mehr abdestillierte. Ausbeute 253 T eines Produktes mit wachsartiger Beschaffenheit, Säurezahl 26, Destillat 15 T.

4) 500 T des nach Beispiel 2 hergestellten Urethanisierungsproduktes, 9,4 T Paraformaldehyd (91 %ig) und 1,6 T Natriumcarbonat wurden wie in Beispiel 3 umgesetzt. Nach Ende der Reaktion erfolgte die Zugabe von 38,7 T 2,2-Bishydroxypropylpropionsäure. Ausbeute 560 T, Säurezahl 22, Destillat 12 T.

### Herstellung einer Dispersion

5) 300 T Zwischenprodukt nach Beispiel 3 und 100 T N-Methylpyrrolidon-2 wurden homogenisiert und mit einer Lösung aus 20 T Triethylamin und 580 T Wasser unter schnellem Rühren versetzt. Es entstand eine kolloidale Dispersion mit ca. 30 % Feststoffanteil.

6) 300 T Zwischenprodukt nach Beispiel 4 und 100 T Äthanol wurden homogenisiert und mit einer Lösung von 20 T Triethylamin und 580 T Wasser unter gutem Rühren vermischt. Es entstand eine kolloidale ca. 30 %ige Dispersion.

7) 780 T eines OH-Gruppen enthaltenden Polyesters (aus 1 Mol Adipinsäure, 1 Mol Terephthalsäure, 2 Mol Isophthalsäure und 4,8 Mol Hexandiol-1,6, Säurezahl 8, OH-Zahl 75) und 122 T n-Butylurethan wurden auf 100°C erhitzt. Die entstandene homogene Schmelze wurde unter vermindertem Druck im Verlauf von einer Stunde von Restfeuchtigkeit befreit. Danach wurden 9 T Titansäuretetraisopropylester zugegeben, der Ansatz auf 140°C erhitzt und unter den Bedingungen einer mäßigen Destillation unter vermindertem Druck für 8 Stunden bei dieser Temperatur gehalten. Anschließend wurden weitere 9 T Titansäuretetraisopropylester zugegeben und die Reaktion für weitere 8 Stunden unter vermindertem Druck fortgesetzt. Ausbeute 64 T Destillat (hauptsächlich n-Butanol) und 842 T urethanisierter Polyester.

8) 500 T des im Beispiel 7 beschriebenen, urethanisierten Polyesters wurden auf 110°C erwärmt. Die entstandene Schmelze wurde mit 12,5 T Paraformaldehyd (91 %ig) und 1,5 T Natriumcarbonat versetzt und der Ansatz 2 Stunden bei 110°C gehalten. Anschließend wurden 80 T 2,2-Bis-hydroxymethylpropionsäure zugefügt und auf 140°C erwärmt. Nach 2 Stunden Reaktionszeit bei 140°C wurde der Ansatz eine weitere Stunde unter vermindertem Druck belassen. Ausbeute 522 T Polyesterurethan, Säurezahl 39.

9) 522 T des im Beispiel 8 erhaltenen Polyesterurethans wurden in 435 T Äthanol bei 50 bis 70°C gelöst. Nach Abkühlen wurden 56 T Triethylamin zugegeben und verrührt. Diese Mischung wurde unter gutem Rühren in 728 T Wasser gegeben, wobei eine kolloidale Dispersion entstand.

10) 770 T eines Polyesters (aus 1 Mol Adipinsäure, 3 Mol Isophthalsäure, 3,8 Mol Hexandiol-1,6 und 1 Mol Neopentylglykol, Säurezahl 7, OH-Zahl 70) 133 T Butylurethan und zweimal 9 T Titansäuretetraisopropylester wurden wie in Beispiel 7 behandelt. Ausbeute 820 T urethanisierter Polyester, Destillat 59 T Butanol.

11) 500 T Reaktionsprodukt nach Beispiel 10, 18,5 T Paraformaldehyd (91 %ig) und 1,5 T Natriumcarbonat sowie 80 T 2,2-Bis-hydroxymethylpropionsäure wurden wie in Beispiel 8 miteinander umgesetzt. Ausbeute 528 T Polyesterurethan, Säurezahl 41,5.

12) 515 T Polyesterurethan nach Beispiel 11, 429 T Äthanol, 57 T Triethylamin und 718 T Wasser wurden analog Beispiel 9 zu einer kolloidalen Dispersion mit 30 % Feststoffanteil verarbeitet.

13) 330 T Polyesterurethan aus Beispiel 7, 86 T Perhydrobisphenol A, 84 T Butylurethan und 5 T Titansäuretetraisopropylester wurden wie in Beispiel 7 beschrieben, umgesetzt. Ausbeute 450 T einer Mischung urethanisierter Zwischenprodukte.

14) 450 T Zwischenprodukt nach Beispiel 13, 32,6 T Paraformaldehyd (91 %ig) 1,6 T Natriumcarbonat und 74,7 T 2,2-Bis-hydroxymethylpropionsäure wurden wie in Beispiel 8 beschrieben, umgesetzt. Ausbeute 526 T Polyesterurethan, Säurezahl 48.

15) 526 T Polyesterurethan nach Beispiel 14, 438 T Äthanol 68 T Triethylamin und 721 T Wasser wurden wie in Beispiel 9 zu einer kolloidalen Dispersion mit 30 % Feststoffgehalt verarbeitet.

16) 300 T Polyesterurethan aus Beispiel 8, 77 T Perhydrobisphenol A, 76 T Butylurethan und 5 T Titansäuretetraisopropylester wurden wie in Beispiel 7 umgesetzt. Ausbeute 417 T.

17) 417 T Polyesterurethan nach Beispiel 16, 30,6 T Paraformaldehyd (91 %ig), 1,5 T Natriumcarbonat und 67,7 T 2,2-Bis-hydroxymethylpropionsäure wurden wie in Beispiel 8, umgesetzt. Ausbeute 487 T Polyesterurethan.

18) 487 T Polyesterurethan nach Beispiel 17, 405 T Äthanol, 64,4 T Triethylamin und 666 T Wasser wurden analog Beispiel 9 zu einer kolloidalen Dispersion von 30 % Festkörperanteil umgesetzt.

**Patentansprüche**

1. Polyurethan-Dispersion auf Basis von Reaktionsprodukten aus A) bismethylolierten Urethanen mit mindestens 2 Urethangruppen und B) Polyhydroxylverbindungen, die zur Ionenbildung befähigte Gruppen enthalten, wobei diese Gruppen in neutralisierter Form vorliegen.

2. Verfahren zur Herstellung von Polyurethan-Dispersionen nach Anspruch 1, dadurch gekennzeichnet, daß A) bis-methylolierte Urethane mit mindestens 2 Urethangruppen mit B) Polyhydroxylverbindungen, die zur Ionenbildung befähigte Gruppen enthalten, bei 100 bis 160°C in der Schmelze umgesetzt werden, das erhaltene Reaktionsprodukt neutralisiert, mit einem Wasser-verträglichen Lösungsmittel vermischt, wobei das Lösungsmittel gegebenenfalls auch vor der Neutralisation zugesetzt wird, und durch Zugabe von Wasser in eine Dispersion überführt wird.

3. Ausführungsform nach Anspruch 1 oder 2, dadurch gekennzeichnet, daß als Polyhydroxylverbindungen Dihydroxycarbonsäuren oder Alkanolamine eingesetzt werden.

4. Ausführungsform nach einem oder mehreren der Ansprüche 1 bis 3, dadurch gekennzeichent, daß zusammen mit der Komponente B) weitere, nicht zur Ionenbildung befähigte Polyhydroxyverbindungen eingesetzt werden.

5. Ausführungsform nach Anspruch 4, dadurch gekennzeichnet, daß Diole oder OH-gruppenhaltige Polyester mit Molekulargewichten von 200 bis 10000 eingesetzt werden.

6. Ausführungsform nach einem oder mehreren der Ansprüche 1 bis 5, dadurch gekennzeichnet, daß zur Neutralisation Alkalihydroxyde, -carbonate, Ammoniak, Amine, Aminoalkohole oder Säuren und quaternisierend wirkende Verbindungen eingesetzt werden.

7. Verwendung der Dispersionen nach einem oder mehreren der Ansprüche 1 bis 6 zur Oberflächenbeschichtung von Metall, Kunststoffen, Glas, Leder und Papier.

8. Verwendung der Dispersionen nach Anspruch 7 im Gemisch mit Epoxid- oder Melaminharzen.

9. Metall, Kunstoffe, Glas, Leder und Papier mit einer Oberflächenbeschichtung auf Basis der Dispersionen nach einem oder mehreren der Ansprüche 1 bis 6.

10. Metall, Kunststoffe, Glas, Leder und Papier mit einer Oberflächenbeschichtung auf Basis der Dispersionen nach einem oder mehreren der Ansprüche 1 bis 6 im Gemisch mit Epoxid- oder Melaminharzen.

**Patentansprüche für folgenden Vertragsstaat : AT**

1. Verfahren zur Herstellung von Polyurethan-Dispersionen auf Basis von Reaktionsprodukten aus A) bismethylolierten Urethanen mit mindestens 2 Urethangruppen und B) Polyhydroxylverbindungen, die zur Ionenbildung befähigte Gruppen enthalten, wobei diese Gruppen in neutralisierter Form vorliegen, dadurch gekennzeichnet, daß A) bismethylolierte Urethane mit mindestens 2 Urethangruppen mit B) Polyhydroxylverbindungen, die zur Ionenbildung befähigte Gruppen enthalten, bei 100 bis 160°C in der Schmelze umgesetzt werden, das erhaltene Reaktionsprodukt neutralisiert, mit einem Wasserverträglichen Lösungsmittel vermischt, wobei das Lösungsmittel gegebenenfalls auch vor der Neutralisation zugesetzt wird, und durch Zugabe von Wasser in eine Dispersion überführt wird.

2. Verfahren nach Anspruch 1, dadurch gekennzeichnet, daß als Polyhydroxylverbindungen Dihydroxycarbonsäuren oder Alkanolamine eingesetzt werden.

3. Verfahren nach Anspruch 1 oder 2, dadurch gekennzeichnet, daß zusammen mit der Komponente B) weitere, nicht zur Ionenbildung befähigte Polyhydroxyverbindungen eingesetzt werden.

4. Verfahren nach Anspruch 3, dadurch gekennzeichnet, daß Diole oder OH-gruppenhaltige Polyester mit Molekulargewichten von 200 bis 10000 eingesetzt werden.

5. Verfahren nach einem oder mehreren der Ansprüche 1 bis 4, dadurch gekennzeichnet, daß zur Neutralisation Alkalihydroxyde, -carbonate, Ammoniak, Amine, Aminoalkohole oder Säuren und quaternisierend wirkende Verbindungen eingesetzt werden.

6. Verwendung der Dispersionen, hergestellt nach einem oder mehreren der Ansprüche 1 bis 5, zur Oberflächenbeschichtung von Metall, Kunststoffen, Glas, Leder und Papier.

7. Verwendung der Dispersionen nach Anspruch 6 im Gemisch mit Epoxid- oder Melaminharzen.

8. Metall, Kunststoffe, Glas, Leder und Papier mit einer Oberflächenbeschichtung auf Basis der Dispersionen, hergestellt nach einem oder mehreren der Ansprüche 1 bis 5.

9. Metall, Kunstoffe, Glas, Leder und Paper mit einer Oberflächenbeschichtung auf Basis der Dispersionen, hergestellt nach einem oder mehreren der Ansprüche 1 bis 5, im Gemisch mit Epoxid- oder Melaminharzen.

**Claims**

1. A polyurethane dispersion based on reaction products from A) bismethylolated urethanes having at least two urethane groups, and B) polyhydroxyl compounds which contain groups which are capable of ion formation, these groups being present in neutralized form.

2. A process for the preparation of polyurethane dispersions as claimed in claim 1, characterized in that A) bismethylolated urethanes having at least two urethane groups are reacted with B) polyhydroxyl compounds which contain groups which are capable of ion formation, at 100 to 160 °C, in the form of melts, the resultant reaction product is neutralized, mixed with a water-compatible solvent, the solvent being added, if appropriate, before the neutralization, and converted to a dispersion by addition of water.

3. The embodiment as claimed in claim 1 or 2, characterized in that dihydroxycarboxylic acids or alkanolamines are employed as polyhydroxyl compounds.

4. The embodiment as claimed in one or more of claims 1 to 3, characterized in that further polyhydroxyl compounds which are not capable of ion formation are employed together with the component B).

5. The embodiment as claimed in claim 4, characterized in that diols or OH group-containing polyesters having molecular weights of 200 to 10,000 are employed.

6. The embodiment as claimed in one or more of claims 1 to 5, characterized in that alkali metal hydroxides, alkali metal carbonates, ammonia, amines, amino alcohols or acids and compounds which cause quaternization are employed for the neutralization.

7. Use of the dispersions as claimed in one or more of claims 1 to 6 for the surface coating of metal, plastic, glass, leather and paper.

8. The use as claimed in claim 7 of the dispersions as a mixture with epoxide or melamine resins.

9. Metal, plastics, glass, leather and paper having a surface coating based on dispersions as claimed in one or more of claims 1 to 6.

10. Metal, plastics, glass, leather and paper having a surface coating based on dispersions as claimed in one or more of claims 1 to 6 as a mixture with epoxide or melamine resins.

**Claims for the following Contracting State : AT**

1. A process for the preparation of a polyurethane dispersion based on reaction products from A) bismethylolated urethanes having at least two urethane groups, and B) polyhydroxyl compounds which contain groups which are capable of ion formation, these groups being present in neutralized form, characterized in that A) bismethylolated urethanes having at least two urethane groups are reacted with B) polyhydroxyl compounds which contain groups which are capable of ion formation, at 100 to 160 °C, in the form of melts, the resultant reaction product is neutralized, mixed with a water-compatible solvent, the solvent being added, if appropriate, before the neutralization, and converted to a dispersion by addition of water.

2. The embodiment as claimed in claim 1 or 2, characterized in that dihydroxycarboxylic acids or alkanolamines are employed as polyhydroxyl compounds.

3. The embodiment as claimed in claim 1 or 2, characterized in that further polyhydroxyl compounds which are not capable of ion formation are employed together with the component B).

4. The embodiment as claimed in claim 4, characterized in that diols or OH group-containing polyesters having molecular weights of 200 to 10,000 are employed.

5. The embodiment as claimed in one or more of claims 1 to 4, characterized in that alkali metal hydroxides, alkali metal carbonates, ammonia, amines, amino alcohols or acids and compounds which cause quaternization are employed for the neutralization.

6. Use of the dispersions prepared as claimed in one or more of claims 1 to 5 for the surface coating of metal, plastic, glass, leather and paper.

7. The use as claimed in claim 6 of the dispersions as a mixture with epoxide or melamine resins.

8. Metal, plastics, glass, leather and paper having a surface coating based on dispersions as claimed in one or more of claims 1 to 5.

9. Metal, plastics, glass, leather and paper having a surface coating based on dispersions as claimed in one or more of claims 1 to 5 as a mixture with epoxide or melamine resins.

## Revendications

1. Dispersion de polyuréthannes à base de produits résultant de la réaction A) d'uréthannes bis-méthylolés contenant au moins 2 radicaux uréthannes et B) de composés polyhydroxyliques renfermant des radicaux aptes à former des ions, ces radicaux étant à l'état neutralisé.

2. Procédé pour préparer des dispersions de poluréthannes selon la revendication 1, procédé caractérisé en ce qu'on fait réagir à l'état fondu, à une température de 100 à 160° C, A) des uréthannes bis-méthylolés contenant au moins deux radicaux uréthannes avec B) des composés polyhydroxyliques contenant des radicaux aptes à former des ions, on neutralise le produit réactionnel obtenu, on le mélange avec un solvant compatible avec l'eau, le solvant étant éventuellement ajouté aussi avant la neutralisation, et on le transforme, par addition d'eau, en une dispersion.

3. Mode d'exécution selon l'une des revendications 1 et 2, caractérisé en ce qu'on utilise, comme composés polyhydroxyliques, des acides dihydroxycarboxyliques ou des alcanolamines.

4. Mode d'exécution selon l'une quelconque des revendications 1 à 3, caractérisé en ce qu'on utilise, avec la composante B), d'autres composés polyhydroxyliques inaptes à former des ions.

5. Mode d'exécution selon la revendication 4, caractérisé en ce qu'on utilise des diols ou des polyesters porteurs de radicaux -OH dont les masses moléculaires sont comprises entre 200 et 10 000.

6. Mode d'exécution selon l'une quelconque des revendications 1 à 5, caractérisé en ce qu'on utilise, pour la neutralisation, des hydroxydes de métaux alcalins, des carbonates de métaux alcalins, l'ammoniac, des amines, des amino-alcools ou des acides et des composés à action quaternisante.

7. Application des dispersions selon l'une quelconque des revendications 1 à 6 pour le revêtement de surfaces de métaux, de matières plastiques, de verre, de cuir et de papier.

8. Application des dispersions selon la revendication 7 en mélange avec des résines époxydiques ou des résines de mélamine.

9. Métaux, matières plastiques, verre, cuir et papier qui portent un revêtement superficiel à base de dispersions selon l'une quelconque des revendications 1 à 6.

10. Métaux, matières plastiques, verre, cuir et papier qui portent un revêtement superficiel à base de dispersions selon l'une quelconque des revendications 1 à 6 en mélange avec des résines époxydiques ou des résines de mélamine.

## Revendications pour l'Etat contractant suivant : AT

1. Procédé pour préparer des dispersions de polyuréthannes à base de produits résultant de la réaction A) d'uréthannes bis-méthylolés contenant au moins 2 radicaux uréthannes avec B) des composés polyhydroxyliques renfermant des radicaux aptes à former des ions, ces radicaux étant à l'état neutralisé, procédé caractérisé en ce qu'on fait réagir à l'état fondu, à une température comprise entre 100 à 160° C, A) des uréthannes bis-méthylolés contenant au moins deux radicaux uréthannes avec B) des composés polyhydroxyliques contenant des radicaux aptes à former des ions, on neutralise le produit réactionnel obtenu, on le mélange avec un solvant compatible avec l'eau, le solvant étant éventuellement ajouté aussi avant la neutralisation, et on le transforme, par addition d'eau, en une dispersion.

2. Procédé selon la revendication 1 caractérisé en ce qu'on utilise, comme composés polyhydroxyliques, des acides dihydroxy-carboxyliques ou des alcanolamines.

3. Procédé selon l'une quelconque des revendications 1 ou 2, caractérisé en ce qu'on utilise, avec la composante B), d'autres composés polyhydroxyliques inaptes à former des ions.

4. Procédé selon la revendication 3 caractérisé en ce qu'on utilise des diols ou des polyesters porteurs de radicaux -OH dont les masses moléculaires sont comprises entre 200 et 10 000.

5. Procédé selon l'une quelconque des revendications 1 à 4, caractérisé en ce qu'on utilise, pour la neutralisation, des hydroxydes de métaux alcalins, des carbonates de métaux alcalins, l'ammoniac, des amines, des amino-alcools ou des acides et des composés à action quaternisante.

6. Application des dispersions préparées selon l'une quelconque des revendications 1 à 5 au revêtement de surfaces de métaux, de matières plastiques, de verre, de cuir et de papier.

7. Application des dispersions selon la revendication 6 en mélange avec des résines époxydiques ou des résines de mélamine.

8. Métaux, matières plastiques, verre, cuir et papier qui portent à leur surface un revêtement à base de dispersions préparées selon l'une quelconque des revendications 1 à 5.

9. Métaux, matières plastiques, verre, cuir et papier qui portent à leur surface un revêtement à base de dispersions préparées selon l'une quelconque des revendications 1 à 5 en mélange avec des résines époxydiques ou des résines de mélamine.